(19) **Europäisches Patentamt / European Patent Office / Office européen des brevets**

(11) **EP 1 502 257 B1**

(12) **FASCICULE DE BREVET EUROPEEN**

(45) Date de publication et mention de la délivrance du brevet:
**25.04.2007 Bulletin 2007/17**

(21) Numéro de dépôt: **03745316.4**

(22) Date de dépôt: **25.03.2003**

(51) Int Cl.:
***G11B 7/003*** *(2006.01)*

(86) Numéro de dépôt international:
**PCT/FR2003/000942**

(87) Numéro de publication internationale:
**WO 2003/083844 (09.10.2003 Gazette 2003/41)**

(54) **PROCEDE D ASSERVISSEMENT RADIAL POUR UN DISPOSITIF DE REPRODUCTION D INFORMATIONS D UN DISQUE OPTIQUE ET DISPOSITIF DE REPRODUCTION METTANT EN OEUVRE CE PROCEDE**

RADIALSTEUERVERFAHREN FÜR EINE EINRICHTUNG ZUR WIEDERGABE VON INFORMATIONEN EINES OPTISCHEN DATENTRÄGERS UND WIEDERGABEEINRICHTUNG ZUR AUSFÜHRUNG DES VERFAHRENS

RADIAL CONTROL METHOD FOR A DEVICE FOR REPRODUCING INFORMATION OF AN OPTICAL DISK, AND REPRODUCTION DEVICE FOR CARRYING OUT SAID METHOD

(84) Etats contractants désignés:
**DE FR GB NL**

(30) Priorité: **02.04.2002 FR 0204077**

(43) Date de publication de la demande:
**02.02.2005 Bulletin 2005/05**

(73) Titulaire: **Thales**
**75008 Paris (FR)**

(72) Inventeurs:
• **Colineau, Joseph,**
**Thales Intellectual Property**
**94117 Arcueil cedex (FR)**
• **Lehureau, Jean-Claude,**
**Thales Intellectual Prop.**
**94117 Arcueil cedex (FR)**

(74) Mandataire: **Esselin, Sophie**
**Marks & Clerk France**
**31-33 Avenue Aristide Briand**
**94117 Arcueil Cedex (FR)**

(56) Documents cités:
**FR-A- 2 805 382**   **JP-A- 2001 134 960**
**US-A- 4 785 441**   **US-B1- 6 657 930**

EP 1 502 257 B1

## Description

La présente invention se rapporte à un procédé d'asservissement radial pour un dispositif de reproduction d'informations d'un disque optique et à un dispositif de reproduction d'informations d'un disque optique mettant en oeuvre ce procédé.

Comme il est connu, un disque optique permet l'enregistrement d'informations sous forme codée à l'aide d'altérations à la surface ou à l'intérieur du disque, telles que reliefs (« pits » en anglais) ou marques de propriétés physiques modifiées (par exemple l'état cristallin ou magnétique) disposées dans un ou plusieurs plans du disque selon des pistes prédéterminées (en spirale ou concentriques). L'information stockée peut être reproduite en explorant optiquement ces altérations à l'aide d'un faisceau lumineux laser focalisé en une tache sur le disque. La lecture de ces disques optiques nécessite un suivi très précis de la position de la tache de lecture sur la ou les pistes portant l'information. Cette fonction est assurée par des circuits d'asservissement de la position radiale et verticale de la tache. Un impératif majeur pour la lecture correcte d'informations enregistrées qui peuvent atteindre de très hautes densités est que la qualité optique du faisceau de lecture, et notamment son centrage sur la piste lue, doit être maintenue constante quelles que soient les positions du disque et du système de lecture.

De nombreux procédés de détection de l'erreur de position radiale ont été proposés. Ils utilisent, pour certains, la tache de lecture et des photodétecteurs utilisés également pour la lecture des informations enregistrées. On a notamment proposé, pour le suivi radial dans le cas de disques DVD qui exigent une grande précision, un procédé dit DPD (« Differential Phase Detection » dans la littérature anglo-saxonne) dans lequel un détecteur multi-photodiodes du type classique quatre-quadrants est utilisé pour former deux signaux par sommation des signaux individuels de photodiodes selon les deux diagonales du détecteur et un signal d'erreur radiale est déduit par l'observation du déphasage des deux signaux obtenus.

Il est ainsi connu du document US-A-4 785 441 (Isaka Haruo et al) un procédé d'asservissement radial comprenant la comparaison de signaux de lecture.

Cependant, malgré ses qualités, un tel procédé n'est pas toujours utilisable efficacement. En effet, lorsque l'on analyse des marques induisant de faibles déphasages sur le faisceau incident, les signaux obtenus par combinaison additive sont trop faibles et inexploitables. C'est notamment le cas pour certains disques de phase multi-couches à faible déphasage induit par les marques.

Il est par ailleurs également connu de procéder à la comparaison par différence desdits signaux comme décrit dans la demande de brevet JP 2001 134960.

Dans ce contexte la présente invention propose de coupler la méthode décrite dans la demande japonaise citée ci-dessus à une méthode beaucoup plus efficace et précise par intercorrélation.

Selon l'invention, il est donc prévu un procédé d'asservissement radial pour un dispositif de reproduction d'informations d'un disque optique dans lequel les informations stockées sur le disque sous forme d'altérations disposées le long de pistes prédéterminées du disque sont explorées par un faisceau lumineux convergeant selon une tache sur le disque optique et résultant en un faisceau émergeant dudit disque par réflexion ou transmission, ledit dispositif étant équipé d'un système de détection multi-photodiodes en champ lointain pour détecter ledit faisceau lumineux émergeant, ledit procédé consistant à :

- combiner les signaux de lecture desdites photodiodes dudit système de détection de manière à constituer quatre sous-systèmes (1, 2, 3, 4) de lecture comportant deux paires de sous-systèmes, les sous-systèmes de chaque paire (1, 2 ; 3, 4) étant disposées de part et d'autre d'un premier axe (Ox) parallèle à l'image de l'axe de la piste explorée et lesdites paires étant disposées de part et d'autre d'un second axe (Oy) perpendiculaire audit premier axe, lesdits premier et second axes étant des axes de symétrie pour ledit système de détection,

- la combinaison des signaux de lecture desdites photodiodes consistant à effectuer la différence entre les signaux de lecture de deux sous-systèmes appartenant à des paires différentes (1, 3 ; 2, 4) pour former un signal de lecture (diag1) selon une première diagonale du système de détection et un signal de lecture (diag2) selon une seconde diagonale du système de détection

ledit procédé étant caractérisé en ce que la comparaison en phase des signaux (diag1; diag2) obtenus de chacun des deux sous-systèmes pour obtenir un signal d'erreur radiale (Sr), sensiblement proportionnel à l'erreur ($\Delta$r) de suivi radial, consiste à effectuer une intercorrélation entre chaque signal de lecture d'une diagonale et le signal de l'autre diagonale affecté d'un retard prédéterminé.

On obtient ainsi un signal d'erreur radiale optimal permettant un suivi extrêmement précis de la piste.

Selon un autre aspect de l'invention, dans le cas où le système de détection est constitué d'un détecteur quatre-quadrants comportant deux paires de photodiodes, les photodiodes de chaque paire étant disposées de part et d'autre d'un premier axe parallèle à l'image de l'axe de la piste explorée et lesdites paires étant disposées de part et d'autre d'un second axe perpendiculaire audit premier axe, lesdits premier et second axes étant des axes de symétrie pour ledit système de détection, un tel procédé est caractérisé en ce que ladite étape de combiner les signaux de lecture desdites photodiodes consiste à effectuer la différence entre les signaux de lecture de deux photodiodes appartenant à des paires différentes pour former un signal de lecture selon une première diagonale du système de détection et un signal de lecture selon une seconde diagonale du système de détection.

Grâce à la mesure par intercorrélation, on peut obtenir un signal d'erreur radiale de manière précise et efficace malgré la déformation des signaux de combinaison lorsqu'il y a un écart radial.

Selon un autre aspect de l'invention, il est également prévu un dispositif de reproduction d'informations d'un disque optique dans lequel les informations stockées sur le disque sous forme d'altérations sont disposées le long de piste prédéterminées du disque, ledit dispositif de reproduction comprenant une source lumineuse pour fournir un faisceau lumineux incident, des premiers moyens optiques pour faire converger ledit faisceau selon une tache sur le disque optique, des seconds moyens optiques pour séparer le faisceau émergeant dudit disque et résultant de la réflexion ou transmission du faisceau incident par le disque, et un système de détection multi-photodiodes disposé en champ lointain sur le trajet dudit faisceau émergeant pour détecter ledit faisceau lumineux, ledit dispositif de reproduction étant caractérisé en ce qu'il comprend en outre :

- des premiers moyens de combinaison recevant les signaux individuels de lecture desdites photodiodes pour élaborer deux signaux de lecture (diag1, diag2) correspondant à deux sous-systèmes dont les fonctions de sensibilité dans le plan du disque comprenant des zones de maximum de sensibilité selon deux directions symétriques avec la direction (Ox) de la piste explorée
- des seconds moyens de comparaison en phase pour comparer les phases desdits deux signaux de lecture des sous-systèmes et fournir un signal d'erreur radiale (Sr), lesdits moyens étant constitués par un circuit d'intercorrélation de chaque signal de lecture de diagonale avec le signal de l'autre diagonale affecté d'un retard prédéterminé.

et en ce que lesdits premiers moyens de combinaison comprennent deux circuits différentiels recevant respectivement les signaux de deux photodiodes appartenant aux diagonales respectives dudit système de détection et fournissant chacun la différence (diag1, diag2) entre les signaux reçus comme signal de lecture selon une première et une seconde diagonale.

Selon encore un autre aspect de l'invention, dans le cas où le système de détection multi-photodiodes est constitué d'un détecteur quatre-quadrants comportant deux paires de photodiodes, les photodiodes de chaque paire étant disposées de part et d'autre d'un premier axe parallèle à l'image de l'axe de la piste explorée et lesdites paires étant disposées de part et d'autre d'un second axe perpendiculaire audit premier axe, lesdits premier et second axes étant des axes de symétrie pour ledit système de détection, un tel dispositif de reproduction est caractérisé en ce que lesdits premiers moyens de combinaison comprennent deux circuits différentiels recevant respectivement les signaux de deux photodiodes appartenant aux diagonales respectives dudit système de détection et fournissant chacun la différence entre les signaux reçus comme signal de lecture selon une première et une seconde diagonale.

L'invention sera mieux comprise et d'autres caractéristiques et avantages apparaîtront à l'aide de la description ci-après et des dessins joints où :

- la figure 1 est le schéma de principe d'une tête optique de dispositif de reproduction pour disque optique ;
- les figures 2A et 2B illustrent les fonctions de sensibilité pour deux sous-systèmes de lecture formés selon l'invention ;
- les figures 3A et 3B sont des diagrammes représentant les signaux de lecture obtenus sur les deux sous-systèmes selon l'invention ;
- la figure 4 est un schéma bloc de principe d'un détecteur d'erreur radiale selon l'invention ;
- la figure 5 est le schéma d'un mode de réalisation d'un élément du détecteur de la figure 4 ;
- la figure 6 montre le diagramme du signal d'erreur radiale obtenu selon l'invention ;
- la figure 7 est le schéma d'un circuit de détection d'erreur radiale avec pré-correction électronique selon l'invention ; et
- la figure 8 est un mode de réalisation possible d'un élément du détecteur de la figure 7.

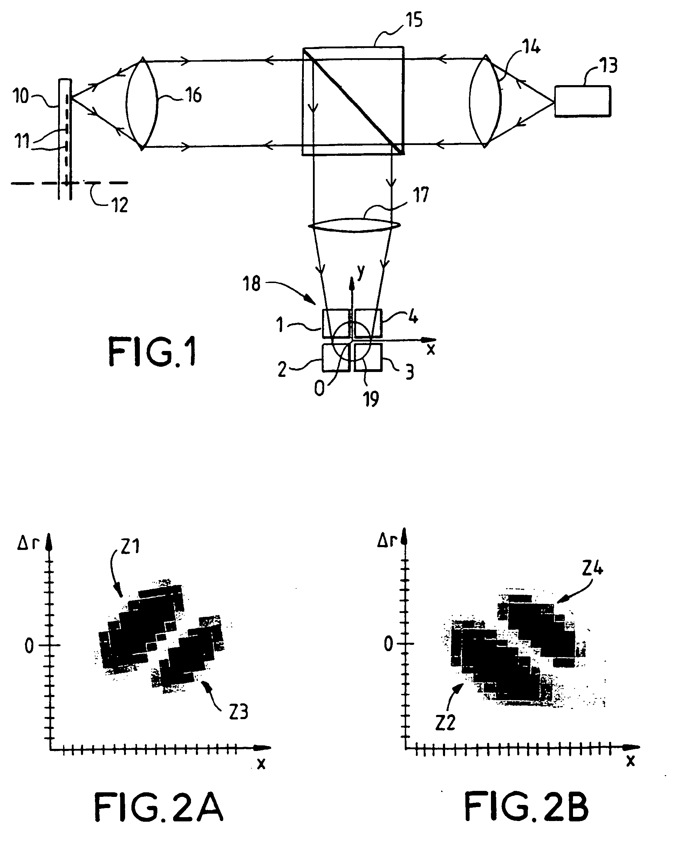

Sur la figure 1, on a représenté le schéma de principe d'une tête optique classique avec détecteur multi-photodiodes. Cette tête optique pour dispositif de reproduction des informations portées par un disque optique comprend une source laser 13 envoyant, par l'intermédiaire d'une optique 14 schématisée par une lentille et d'un séparateur 15, un faisceau lumineux vers un objectif 16. Cet objectif 16 focalise le faisceau incident en une tache sur un disque optique 10, sur lequel sont stockées des informations sous la forme d'altérations disposées le long de pistes prédéterminées 11. Le disque est entraîné en rotation autour d'un axe 12 et la tache explore donc la piste défilant en face d'elle. Le faisceau lumineux incident est soit transmis à travers le disque, soit réfléchi comme ici, pour donner naissance à un faisceau émergeant du disque, repris par l'objectif 16 et séparé du faisceau incident par le séparateur 15 pour être reçu par un détecteur multi-photodiodes 18 par l'intermédiaire d'une optique 17, le détecteur 18 étant placé en champ lointain.

Le principe de l'invention consiste à fractionner le détecteur de manière à créer deux sous-systèmes de lecture dont les fonctions de sensibilité dans le plan du disque forment deux angles symétriques avec la direction de la piste. On compare ensuite les signaux formés à partir de ces deux sous-systèmes : si le système est parfaitement centré, les signaux sont identiques sur les deux voies ; si, par contre, il y a un écart de position, il apparaît une dissymétrie entre les deux voies, qui est, au premier ordre, proportionnelle à l'écart à mesurer.

Pour fixer les idées et mieux illustrer le principe de l'invention, on suppose que le détecteur multi-photodiodes 18 (Fig. 1) est un détecteur quatre-quadrants comprenant quatre photodiodes 1, 2, 3, 4 disposées par paires. Les photodiodes de chaque paire 1, 2 ou 3, 4 sont disposées de part et d'autre d'un premier axe Ox parallèle à l'image de l'axe de la piste explorée. D'autre part, les deux paires sont disposées de part et d'autre d'un second axe Oy perpendiculaire à l'axe Ox, de telle sorte que les axes Ox et Oy soient des axes de symétrie du détecteur.

Les signaux individuels des photodiodes sont combinés, selon l'invention, pour former par différence deux groupes de signaux en diagonale :

$$\text{diag1} = d1 - d3$$

$$\text{diag2} = d2 - d4$$

où d1 à d4 sont les signaux individuels des photodiodes 1 à 4 et diag1 et diag2 sont les signaux de lecture obtenus selon une première et une seconde diagonale respectivement.

Les fonctions de sensibilité, ou de lecture, correspondantes sont illustrées sur les figures 2A pour la première diagonale et 2B pour la seconde diagonale. Sur la figure 2A, les zones Z1 et Z3 représentent des zones de maximum de sensibilité correspondant aux photodiodes 1 et 3. Des remarques analogues s'appliquent aux zones Z2 et Z4 de la figure 2B pour les photodiodes 2 et 4.

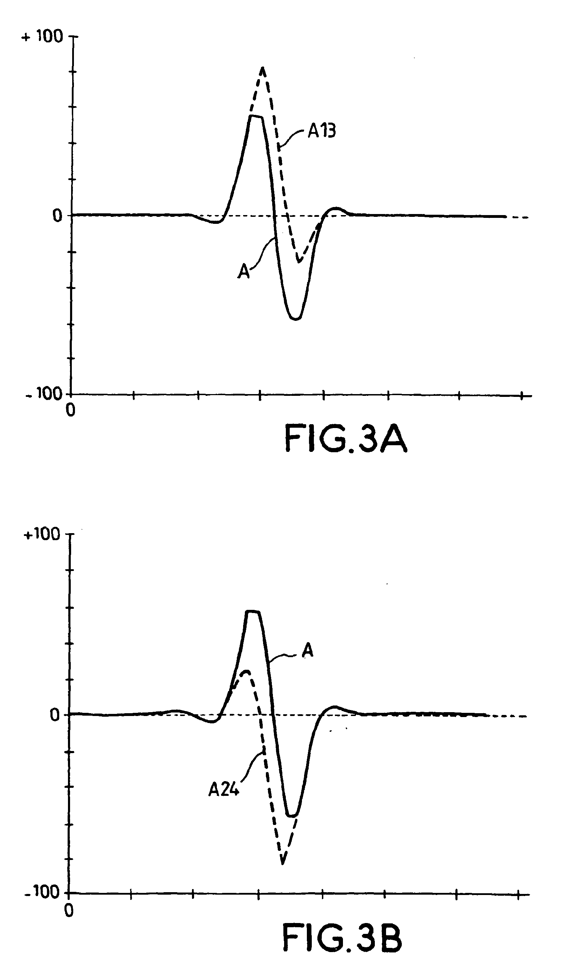

Les signaux de lecture diag1 et diag2 sont illustrés sur les figures 3A et 3B respectivement pour une marque isolée défilant devant le faisceau incident, les courbes indiquant l'amplitude du signal en fonction de la position de la marque. Les courbes A correspondent au cas d'une marque centrée radialement et sont parfaitement identiques et en phase. Par contre, si la tache n'est plus centrée sur la piste, les signaux de lecture des deux sous-systèmes se déforment et se déphasent. Dans le cas de l'écart radial illustré, on obtient un signal diag1 (courbe A13) déformé et en avance de phase alors que le signal diag2 (courbe A24) est en retard de phase.

D'où la possibilité selon l'invention d'élaborer un signal d'erreur, en détectant le déphasage des signaux de lecture l'un par rapport à l'autre.

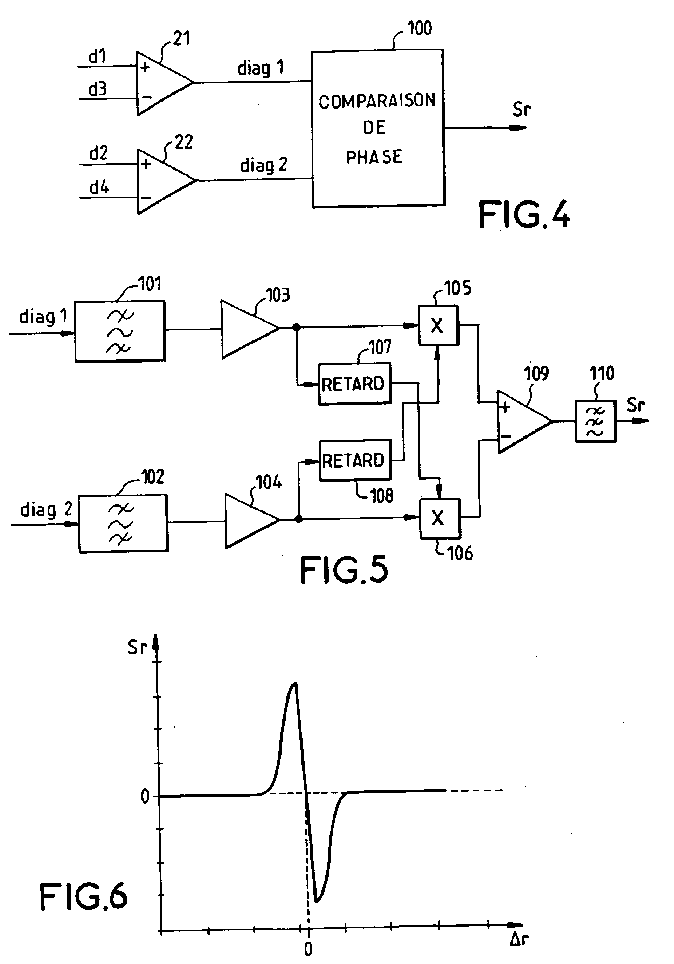

La figure 4 montre le schéma d'un détecteur d'erreur radiale basé sur ce principe. Deux amplificateurs différentiels 21, 22 reçoivent les signaux individuels de photodiodes d1 à d4 et fournissent respectivement par différence les signaux de lecture diag1 et diag2 qui sont envoyés à un circuit de comparaison en phase 100 qui élabore le signal d'erreur radiale Sr.

Ce circuit de comparaison en phase peut être de tout type connu. Cependant, la mesure du déphasage est compliquée par le fait que les signaux sont déformés et qu'il faudrait donc éventuellement corriger ces signaux avant mesure du déphasage, par filtrage, égalisation des amplitudes, ...

Une méthode beaucoup plus efficace et précise par intercorrélation est représentée sur la figure 5, montrant un mode de réalisation du circuit 100. Celui-ci comporte deux voies de traitement pour traiter respectivement les signaux de lecture diag1 et diag2. Chaque voie comporte un filtre passe-bande 101, 102, un amplificateur 103, 104, dont la sortie est appliquée à une première entrée d'un multiplieur 105, 106 et à un circuit à retard 107, 108. La sortie du circuit à retard d'une voie est appliquée à l'autre entrée du multiplieur de l'autre voie. Les sorties des multiplieurs 105, 106 des deux voies sont appliquées à un amplificateur différentiel 109 qui en fait la différence et celle-ci, après filtrage passe-bas 110, constitue le signal d'erreur radiale Sr, représentatif en signe et en amplitude de l'erreur de positionnement radial Δr.

Le choix du retard prédéterminé appliqué par les circuits 107 et 108 dépend de la fréquence maximale des signaux de lecture (donc de la densité d'enregistrement et de la vitesse de défilement des informations) ainsi que de la profondeur de modulation du disque optique, c'est-à-dire du déphasage optique produit par les marques sur le faisceau de lecture.

Typiquement, ce retard est inférieur à la période d'horloge de l'information lue (qu'on appelle parfois bit « canal »). En fait, ce retard doit être inférieur au retard (déphasage) maximum que présente un signal de lecture de diagonale par rapport à l'autre lorsque l'on va sauter d'une piste à la piste adjacente. On obtient avec le détecteur décrit ci-dessus le signal d'erreur radiale Sr dont les variations en fonction de l'erreur de positionnement radial Δr sont représentées sur la figure 6.

L'invention a aussi pour but de remédier à un problème complémentaire apparaissant lorsque la boucle d'asservissement radial décrite ci-dessus (comme il est bien connu, le signal d'erreur radiale Sr est utilisé pour commander un actuateur radial permettant de repositionner la tache de lecture) est en train de se régler. En effet, le temps de réponse de la boucle ci-dessus est relativement lent, ce qui peut constituer une gêne lors de sauts de piste, chocs, ..., car le signal de lecture subit les effets du déphasage pendant la phase de rétablissement du centrage.

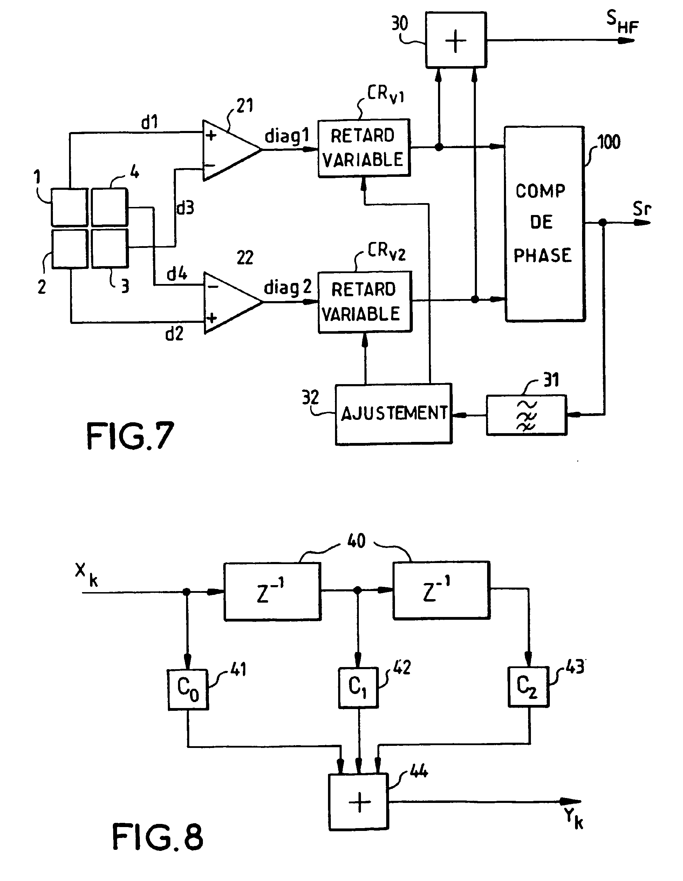

Pour remédier à cela, on prévoit des moyens de pré-correction électronique rapide du signal de lecture en utilisant la partie haute fréquence de l'écart radial mesuré. Ces moyens sont décrits en référence à la figure 7. Sur cette figure, on retrouve le détecteur à quatre photodiodes 1, 2, 3, 4. les deux amplificateurs différentiels 21, 22 formant les signaux de lecture de diagonale diag1, diag2 et le circuit de comparaison en phase 100. La pré-correction rapide consiste à ajuster de manière dynamique le retard des signaux de lecture de diagonale en fonction de l'erreur radiale mesurée. Pour cela, il est prévu dans chacune des voies des signaux de diagonale un circuit à retard variable CRv1, CRv2 ayant une entrée de commande de retard et un circuit d'ajustement 32 relié aux entrées de commande des circuits CRv1, CRv2. Le circuit 32 reçoit, par l'intermédiaire d'un filtre passe-haut 31, les composantes haute fréquence du signal d'erreur radiale Sr délivré par le comparateur 100, ceci pour ne pas mettre en concurrence le circuit de pré-correction avec la boucle d'asservissement principal qui traite la partie basse fréquence et composante continue du spectre du signal d'asservissement radial Sr.

Le signal de sortie de lecture $S_{HF}$ du dispositif selon l'invention est obtenu en faisant, par un additionneur 30, la somme des signaux de lecture des diagonales. A noter que l'on obtient ainsi un signal de lecture résultant fort, stable et avec un rapport signal à bruit élevé. Le circuit d'ajustement 32 permet de commander en sens opposé les retards des circuits CRv1, CRv2 en fonction du sens et de l'amplitude des composantes haute fréquence du signal d'erreur radiale Sr, ce qui permet de minimiser les effets de déphasage du signal de sortie de lecture.

On ne prélève que la partie haute fréquence du signal Sr de manière à ne pas diminuer le gain de la boucle principale d'asservissement radial qui traite seule les signaux basse fréquence.

Les circuits à retard variable CRv1, CRv2 peuvent être réalisés par exemple selon le schéma de la figure 8. Les blocs 40 correspondent à l'application d'un incrément de retard. Les blocs 41, 42, 43 représentent des multiplieurs respectivement par les coefficients $C_0$, $C_1$, $C_2$ et le bloc 44 un additionneur. Un tel circuit constitue un filtre numérique réalisant la convolution de la suite d'échantillons d'entrée $X_k$ par la suite de coefficients $C_j$:

$$Y_k = \Sigma_j\ C_j * X_{(k-j)}$$

En choisissant convenablement les coefficients $C_j$, on obtient un signal $Y_k$ identique au signal $X_k$ retardé. Ces coefficients peuvent être par exemple les coefficients d'interpolation de Lagrange. En changeant la valeur des coefficients, on peut changer le retard imposé au signal. Ce filtre peut être micro-programmé ou réalisé avec des opérateurs câblés.

Bien entendu, les exemples décrits ne sont nullement limitatifs de l'invention. L'invention est particulièrement bien adaptée à la lecture de disques avec un faible taux de modulation, tels que disques de phase multi-couches, ou aux disques magnéto-optiques. De plus, la pré-correction électronique améliore le signal de sortie de lecture, surtout dans les phases transitoires (sauts de piste, chocs, ...). Elle améliore les performances de l'asservissement en réduisant les temps de réponse, en augmentant la stabilité et en corrigeant les effets des résonances parasites.

## Revendications

**1.** Procédé d'asservissement radial pour un dispositif de reproduction d'informations d'un disque optique dans lequel les informations stockées sur le disque sous forme d'altérations disposées le long de pistes prédéterminées du disque sont explorées par un faisceau lumineux convergeant selon une tache sur le disque optique et résultant en un faisceau émergeant dudit disque par réflexion ou transmission, ledit dispositif étant équipé d'un système de détection multi-photodiodes en champ lointain pour détecter ledit faisceau lumineux émergeant, ledit procédé consistant à :

- combiner les signaux de lecture desdites photodiodes dudit système de détection de manière à constituer quatre sous-systèmes (1, 2, 3, 4) de lecture comportant deux paires de sous-systèmes, les sous-systèmes de chaque paire (1, 2 : 3, 4) étant disposées de part et d'autre d'un premier axe (Ox) parallèle à l'image de l'axe de la piste explorée et lesdites paires étant disposées de part et d'autre d'un second axe (Oy) perpendiculaire audit premier axe, lesdits premier et second axes étant des axes de symétrie pour ledit système de détection,
- la combinaison des signaux de lecture desdites photodiodes consistant à effectuer la différence entre les signaux de lecture de deux sous-systèmes appartenant à des paires différentes (1, 3 ; 2, 4) pour former un signal de lecture (diag1) selon une première diagonale du système de détection et un signal de lecture (diag2) selon une seconde diagonale du système de détection

ledit procédé étant **caractérisé en ce que** la comparaison en phase des signaux (diag1;diag2) obtenus de chacun des deux sous-systèmes pour obtenir un signal d'erreur radiale (Sr), sensiblement proportionnel à l'erreur ($\Delta r$) de suivi radial, consiste à effectuer une intercorrélation entre chaque signal de lecture d'une diagonale et le signal de l'autre diagonale affecté d'un retard prédéterminé.

**2.** Procédé selon la revendication 1, dans lequel les sous-systèmes (1, 2, 3, 4) sont constitués par les photodiodes d'un détecteur quatre-quadrants.

**3.** Procédé selon l'une des revendications 1 ou 2, **caractérisé en ce que** ledit retard prédéterminé est choisi en fonction de la fréquence maximale des signaux de lecture et de la profondeur de modulation dudit disque optique.

**4.** Procédé selon l'une des revendications 1 à 3, **caractérisé en ce que** ledit retard prédéterminé est choisi inférieur à la période d'horloge de l'information de lecture.

**5.** Procédé selon l'une quelconque des revendications précédentes, **caractérisé en ce qu'**il comporte en outre une étape de pré-correction rapide consistant à ajuster de manière dynamique les retards desdits signaux de lecture (diag1, diag2) selon lesdites première et seconde diagonales, dans les voies d'élaboration du signal de sortie de lecture (SHF), en fonction dudit signal d'erreur radiale (Sr).

**6.** Procédé selon la revendication 5, **caractérisé en ce que** ladite étape de pré-correction rapide consiste à :

- filtrer ledit signal d'erreur radiale pour ne conserver que les composantes haute fréquence dudit signal
- déterminer une variation en sens opposé desdits retards en fonction de la valeur desdites composantes haute fréquence, pour minimiser les effets de déphasage du signal de sortie de lecture (SHF)

**7.** Dispositif de reproduction d'informations d'un disque optique dans lequel les informations stockées sur le disque (10) sous forme d'altérations sont disposées le long de pistes (11) prédéterminées du disque, ledit dispositif de reproduction comprenant une source lumineuse (13) pour fournir un faisceau lumineux incident, des premiers moyens optiques (14, 15, 16) pour faire converger ledit faisceau selon une tache sur le disque optique (10), des seconds moyens optiques (16, 15, 17) pour séparer le faisceau émergeant dudit disque et résultant de la réflexion ou transmission du faisceau incident par le disque, et un système de détection multi-photodiodes (18) disposé en champ lointain sur le trajet dudit faisceau émergeant pour détecter ledit faisceau lumineux, ledit dispositif de reproduction étant **caractérisé en ce qu'**il comprend en outre :

- des premiers moyens de combinaison (21, 22) recevant les signaux individuels de lecture (d1, d3 ; d2, d4) desdites photodiodes (1, 2, 3, 4) pour élaborer deux signaux de lecture (diag1, diag2) correspondant à deux sous-systèmes dont les fonctions de sensibilité dans le plan du disque comprenant des zones de maximum de sensibilité selon deux directions symétriques avec la direction (Ox) de la piste explorée
- des seconds moyens de comparaison en phase (100) pour comparer les phases desdits deux signaux de lecture des sous-systèmes et fournir un signal d'erreur radiale (Sr), lesdits moyens étant constitués par un circuit d'intercorrélation (100) de chaque signal de lecture de diagonale avec le signal de l'autre diagonale affecté d'un retard prédéterminé.

et **en ce que** lesdits premiers moyens de combinaison comprennent deux circuits différentiels (21, 22) recevant respectivement les signaux de deux photodiodes (1, 3 ; 2, 4) appartenant aux diagonales respectives dudit système de détection et fournissant chacun la différence (diag1, diag2) entre les signaux reçus comme signal de lecture selon une première et une seconde diagonale.

**8.** Dispositif de reproduction selon la revendication 7, dans lequel le système de détection multi-photodiodes (18) est constitué d'un détecteur quatre-quadrants (1, 2, 3, 4) comportant deux paires de photodiodes, les photodiodes de chaque paire (1 , 3 ; 2, 4) étant disposées de part et d'autre d'un premier axe (Ox) parallèle à l'image de l'axe de la piste explorée et lesdites paires étant disposées de part et d'autre d'un second axe (Oy) perpendiculaire audit premier axe, lesdits premier et second axes étant des axes de symétrie pour ledit système de détection.

**9.** Dispositif de reproduction selon l'une des revendications 7 ou 8, **caractérisé en ce que** ledit circuit d'intercorrélation (100) comprend deux voies de traitement (101, 103, 105, 107; 102, 104, 106, 108) traitant respectivement le signal de lecture selon la première diagonale (diag1) et le signal de lecture selon la seconde diagonale (diag2), chaque voie comportant au moins:

- un circuit de filtrage passe-bande (101 ; 102) recevant le signal de lecture correspondant ;
- un multiplieur (105 ; 106) recevant sur une entrée le signal filtré par ledit circuit de filtrage ;
- un circuit à retard (107 ; 108) recevant ledit signal filtré et connecté à l'autre entrée du multiplieur de l'autre voie ;

et **en ce que** ledit circuit d'intercorrélation comprend en outre :

- un circuit différentiel (109) effectuant la différence des signaux fournis par les deux multiplieurs (105, 106) ; et
- un filtre passe-bas (110) connecté audit circuit différentiel (109) pour fournir ledit signal d'erreur radiale (Sr).

**10.** Dispositif de reproduction selon l'une quelconque des revendications 7 à 9, **caractérisé en ce qu'**il comporte en outre un circuit additionneur (30) recevant les signaux desdits deux circuits différentiels (21, 22) et fournissant un signal ($S_{HF}$) de sortie de lecture des informations stockées sur le disque.

**11.** Dispositif de reproduction selon la revendication 10, **caractérisé en ce que**, pour effectuer une pré-correction rapide des signaux de lecture, ledit dispositif de reproduction comprend en outre :

- à la sortie de chacun desdits circuits différentiels (21, 22), un circuit à retard variable (CRv1, CRv2) ayant une entrée de commande de retard ;
- un circuit d'ajustement (32) relié aux entrées de commande des circuits à retard variable ; et
- des moyens de filtrage passe-haut (31) connectés entre la sortie des seconds moyens de comparaison en phase (100) et ledit circuit d'ajustement (32), ledit circuit d'ajustement commandant en sens opposé les circuits à retard variable en fonction de la partie haute fréquence dudit signal d'erreur radiale (Sr).

**Claims**

**1.** Radial slaving method for a device for reproducing information from an optical disc, in which the information stored on the disc in the form of alterations arranged along predetermined tracks of the disc is explored by a laser beam, which converges at a spot on the optical disc and results in a beam emerging from the said disc by reflection or transmission, the said device being equipped with a multi-photodiode far-field detection system for detecting the said emergent light beam, the said method consisting in:

- combining the read signals of the said photodiodes of the said detection system so as to form four reading subsystems (1, 2, 3, 4) having two pairs of subsystems, the subsystems of each pair (1, 2; 3, 4) being arranged on either side of a first axis (Ox) parallel to the image of the axis of the track being explored, and the said pairs being arranged on either side of a second axis (Oy) perpendicular to the said first axis, the said first and second axes being axes of symmetry for the said detection system,
- combining the read signals of the said photodiodes consisting in taking the difference between the read signals of two subsystems belonging to different pairs (1, 3; 2, 4) in order to form a read signal (diag1) along a first diagonal of the detection system and a read signal (diag2) along a second diagonal of the detection system, the said method being **characterized in that** phase-comparing the signals (diag1; diag2) obtained by each of the two subsystems in order to obtain a radial error signal (Sr) substantially proportional to the radial tracking error (Δr), consists in performing a cross-correlation between each read signal of one diagonal and the signal of the other diagonal, to which a predetermined delay is assigned.

**2.** Method according to Claim 1, in which the subsystems (1, 2, 3, 4) consist of the photodiodes of a four-quadrant detector.

**3.** Method according to either of Claims 1 and 2, **characterized in that** the said predetermined delay is selected as a function of the maximum frequency of the read signals and the modulation depth of the said optical disc.

**4.** Method according to one of Claims 1 to 3, **characterized in that** the said predetermined delay is selected to be less than the clock period of the information to be read.

**5.** Method according to any one of the preceding claims, **characterized in that** it furthermore includes a rapid pre-correction step, which consists in dynamically adjusting the delays of the said read signals (diag1, diag2) along the said first and second diagonals, in the channels for constructing the readout signal (SHF), as a function of the said radial error signal (Sr).

**6.** Method according to Claim 5, **characterized in that** said rapid pre-correction step consists in:

- filtering the said radial error signal in order to keep only the high-frequency components of the said signal;
- determining an inverse variation of the said delays as a function of the said high-frequency component values, in order to minimize the phase-shift effects of the readout signal (SHF).

**7.** Device for reproducing information from an optical disc, in which the information stored on the disc (10) in the form of alterations is arranged along predetermined tracks (11) of the disc, the said reproduction device comprising a light source (13) for providing an incident light beam, first optical means (14, 15, 16) for converting the said beam at a spot on the optical disc (10), second optical means (16, 15, 17) for splitting the beam emerging from the said disc and resulting from reflection or transmission of the incident beam by the disc, and a multi-photodiode detection system (18) arranged in the far-field on the path of the said emergent beam in order to detect the said light beam, the said reproduction device being **characterized in that** it furthermore comprises:

- first combination means (21, 22), which receive the individual read signals (d1, d3; d2, d4) of the said photodiodes (1, 2, 3, 4) in order to construct two read signals (diag1, diag2) corresponding to two subsystems, the sensitivity functions of which in the plane of the disc comprising regions of maximum sensitivity along two directions symmetrical with the direction (Ox) of the track being explored;
- second phase comparison means (100) for comparing the phases of the said two read signals of the subsystems and providing a radial error signal (Sr), the said means consisting of a circuit (100) for cross-correlation of each diagonal read signal with the signal of the other diagonal, to which a predetermined delay is assigned,

and **in that** the said first combination means comprise two differential circuits (21, 22), which respectively receive the signals of two photodiodes (1, 3; 2, 4) belonging to the two respective diagonals of the said detection system and each provide the difference (diag1, diag2) between the received signals as a read signal along a first and a second diagonal.

8. Reproduction device according to Claim 7, in which the multi-photodiode detection system (18) consists of a four-quadrant detector (1, 2, 3, 4) having two pairs of photodiodes, the photodiodes of each pair (1, 2; 3, 4) being arranged on either side of a first axis (Ox) parallel to the image of the axis of the track being explored, and the said pairs being arranged on either side of a second axis (Oy) perpendicular to the said first axis, the said first and second axes being axes of symmetry for the said detection system.

9. Reproduction device according to either of Claim 7 and 8, **characterized in that** the said cross-correlation circuit (100) comprises two processing channels (101, 103, 105, 107; 102, 104, 106, 108), respectively processing the read signal along the first diagonal (diag1) and the read signal along the second diagonal (diag2), each channel comprising at least:

- a band-pass filtering circuit (101; 102) which receives the corresponding read signal;
- a multiplier (105; 106) which receives the signal filtered by the said filtering circuit on one input;
- a delay circuit (107; 108) which receives the said filtered signal and is connected to the other input of the multiplier of the other channel;

and **in that** the said cross-correlation circuit furthermore comprises:

- a differential circuit (109) which takes the difference of the signal is provided by the two multipliers (105, 106); and
- a low-pass filter (110) connected to the said differential circuit (109) for providing the said radial error signal (Sr).

10. Reproduction device according to any one of Claims 7 to 9, **characterized in that** furthermore includes a adder circuit (30), which receives the signals of the said to differential circuits (21, 22) and provides a readout signal ($S_{HF}$) for the information stored on the disc.

11. Reproduction device according to Claim 10, **characterized in that**, in order to perform a rapid precorrection of the read signals, the said reproduction device furthermore comprises:

- at the output of each of the said differential circuits (21, 22), a variable delay circuit (CRv1, CRv2) which has a delay control input;
- an adjustment circuit (32) connected to the control inputs of the variable delay circuits; and

high-pass filtering means (31) connected between the output of the second phase comparison means (100) and the said adjustment circuit (32), the said adjustment circuit controlling the variable delay circuits in reverse as a function of the high-frequency part of the said radial error signal (Sr).

## Patentansprüche

1. Verfahren zur radialen Nachführung für eine Informationswiedergabevorrichtung einer optischen Speicherplatte, bei dem die auf der Platte in Form von entlang vorbestimmter Spuren der Platte angeordneten Veränderungen gespeicherten Informationen von einem Lichtstrahl untersucht werden, der gemäß einem Fleck auf der optischen Speicherplatte konvergiert und in einem Strahl resultiert, der aus der Platte durch Reflexion oder Übertragung austritt, wobei die Vorrichtung mit einem Multifotodioden-Fernfelderfassungssystem ausgestattet ist, um den austretenden Lichtstrahl zu erfassen, wobei das Verfahren darin besteht:

- die Lesesignale der Fotodioden des Erfassungssystems so zu kombinieren, dass vier Lese-Teilsysteme (1, 2, 3, 4) gebildet werden, die zwei Paare von Teilsystemen aufweisen,

wobei die Teilsysteme jedes Paars (1, 2; 3, 4) zu beiden Seiten einer ersten Achse (Ox) parallel zum Bild der Achse der untersuchten Spur angeordnet sind, und die Paare zu beiden Seiten einer zweiten Achse (Oy) lotrecht zur ersten Achse angeordnet sind, wobei die erste und zweite Achse Symmetrieachsen für das Erfassungssystem sind,

- die Kombination der Lesesignale der Fotodioden darin besteht, die Differenz zwischen den Lesesignalen von zwei Teilsystemen zu bilden, die zu unterschiedlichen Paaren (1, 3; 2, 4) gehören, um ein Lesesignal (diag1) gemäß einer ersten Diagonalen des Erfassungssystems und ein Lesesignal (diag2) gemäß einer zweiten Diagonalen des Erfassungssystems zu formen,

wobei das Verfahren **dadurch gekennzeichnet ist, dass** der Phasenvergleich der Signale (diag1; diag2), die von jedem der zwei Teilsysteme erhalten werden, um ein radiales Fehlersignal (Sr) zu erhalten, das im Wesentlichen proportional zum radialen Trackingfehler ($\Delta r$) ist, darin besteht, eine Interkorrelation zwischen jedem Lesesignal einer Diagonale und dem Signal der anderen Diagonale durchzuführen, das mit einer vorbestimmten Verzögerung behaftet ist.

2. Verfahren nach Anspruch 1, bei dem die Teilsysteme (1, 2, 3, 4) aus den Fotodioden eines Vier-Quadranten-Detektors bestehen.

3. Verfahren nach einem der Ansprüche 1 oder 2, **dadurch gekennzeichnet, dass** die vorbestimmte Verzögerung in Abhängigkeit von der maximalen Frequenz der Lesesignale und der Modulationstiefe der optischen Speicherplatte gewählt wird.

4. Verfahren nach einem der Ansprüche 1 bis 3, **dadurch gekennzeichnet, dass** die vorbestimmte Verzögerung geringer als die Taktperiode der Leseinformation gewählt wird.

5. Verfahren nach einem der vorhergehenden Ansprüche, **dadurch gekennzeichnet, dass** es weiter einen Schritt der schnellen Vorkorrektur aufweist, der darin besteht, die Verzögerungen der Lesesignale (diag1, diag2) dynamisch gemäß der ersten und der zweiten Diagonale in den Ausarbeitungskanälen des Ausgangs-Lesesignals (SHF) in Abhängigkeit vom radialen Fehlersignal (Sr) einzustellen.

6. Verfahren nach Anspruch 5, **dadurch gekennzeichnet, dass** der Schritt der schnellen Vorkorrektur darin besteht:

   - das radiale Fehlersignal zu filtern, um nur die Hochfrequenzkomponenten des Signals zu behalten,
   - eine Veränderung in Gegenrichtung der Verzögerungen in Abhängigkeit vom Wert der Hochfrequenzkomponenten zu bestimmen, um die Phasenverschiebungswirkungen des Ausgangs-Lesesignals (SHF) zu minimieren.

7. Vorrichtung zur Wiedergabe der Informationen einer optischen Speicherplatte, bei der die auf der Platte (10) in Form von Veränderungen gespeicherten Informationen entlang von vorbestimmten Spuren (11) der Platte angeordnet sind, wobei die Wiedergabevorrichtung eine Lichtquelle (13), um einen einfallenden Lichtstrahl zu liefern, erste optische Mittel (14, 15, 16), um den Strahl gemäß einem Fleck auf der optischen Speicherplatte (10) konvergieren zu lassen, zweite optische Mittel (16, 15, 17), um den aus der Platte austretenden und aus der Reflexion oder Übertragung des einfallenden Strahls von der Platte resultierenden Strahl zu trennen, und ein Multifotodioden-Erfassungssystem (18) aufweist, das im fernen Feld auf der Bahn des austretenden Strahls angeordnet ist, um den Lichtstrahl zu erfassen, wobei die Wiedergabevorrichtung **dadurch gekennzeichnet ist, dass** sie weiter aufweist:

   - erste Kombinationsmittel (21, 22), die die individuellen Lesesignale (d1, d3; d2, d4) von den Fotodioden (1, 2, 3, 4) empfangen, um zwei Lesesignale (diag1, diag2) auszuarbeiten, die zwei Teilsystemen entsprechen, deren Empfindlichkeitsfunktionen in der Ebene der Platte Zonen mit einem Maximum an Empfindlichkeit gemäß zweier Richtungen symmetrisch zur Richtung (Ox) der untersuchten Spur aufweisen,
   - zweite Phasenvergleichsmittel (100), um die Phasen der zwei Lesesignale der Teilsysteme zu vergleichen und ein radiales Fehlersignal (Sr) zu liefern, wobei die Mittel aus einer Interkorrelationsschaltung (100) jedes Diagonalen-Lesesignals mit dem Signal der anderen Diagonale bestehen, das mit einer vorbestimmten Verzögerung behaftet ist,

und dass die ersten Kombinationsmittel zwei Differentialschaltungen (21, 22) aufweisen, die je die Signale von zwei Fotodioden (1, 3; 2, 4) empfangen, die zu den jeweiligen Diagonalen des Erfassungssystems gehören und die jeweils die Differenz (diag1, diag2) zwischen den empfangenen Signalen als Lesesignal gemäß einer ersten und einer zweiten Diagonale liefern.

8. Wiedergabevorrichtung nach Anspruch 7, bei der das Multifotodioden-Erfassungssystem (18) aus einem Vier-Quadranten-Detektor {1, 2, 3, 4) besteht, der zwei Paare von Fotodioden aufweist, wobei die Fotodioden jedes Paars (1, 3; 2, 4) zu beiden Seiten einer ersten Achse (Ox) parallel zum Bild der Achse der untersuchten Spur angeordnet sind und die Paare zu beiden Seiten einer zweiten Achse (Oy) lotrecht zur ersten Achse angeordnet sind,
wobei die erste und die zweite Achse Symmetrieachsen für das Erfassungssystem sind.

9. Wiedergabevorrichtung nach einem der Ansprüche 7 oder 8, **dadurch gekennzeichnet, dass** die Interkorrelationsschaltung (100) zwei Verarbeitungskanäle (101, 103, 105, 107; 102, 104, 106, 108) aufweist, die das Lesesignal gemäß der ersten Diagonale (diag1) bzw. das Lesesignal gemäß der zweiten Diagonale (diag2) verarbeiten, wobei jeder Kanal mindestens aufweist:

- eine Tiefpassfilterschaltung (101; 102), die das entsprechende Lesesignal empfängt;
- einen Multiplikator (105; 106), der an einem Eingang das von der Filterschaltung gefilterte Signal empfängt;
- eine Verzögerungsschaltung (107; 108), die das gefilterte Signal empfängt und mit dem anderen Eingang des Multiplikators des anderen Kanals verbunden ist;

und dass die Interkorrelationsschaltung außerdem aufweist:

- eine Differentialschaltung (109), die die Differenz der von den zwei Multiplikatoren (105, 106) gelieferten Signale bildet; und
- ein Tiefpassfilter (110), das mit der Differentialschaltung (109) verbunden ist, um das radiale Fehlersignal (Sr) zu liefern.

10. Wiedergabevorrichtung nach einem der Ansprüche 7 bis 9, **dadurch gekennzeichnet, dass** sie außerdem eine Addierschaltung (30) aufweist, die die Signale der zwei Differentialschaltungen (21, 22) empfängt und ein Ausgangs-Lesesignal ($S_{HF}$) der auf der Platte gespeicherten Informationen liefert.

11. Wiedergabevorrichtung nach Anspruch 10, **dadurch gekennzeichnet, dass** sie zur Durchführung einer schnellen Vorkorrektur der Lesesignale außerdem aufweist:

- am Ausgang jeder der Differentialschaltungen (21, 22) eine variable Verzögerungsschaltung (CRv1, CRv2), die einen Verzögerungssteuereingang aufweist;
- eine Anpassungsschaltung (32), die mit den Steuereingängen der variablen Verzögerungsschaltungen verbunden ist; und
- Hochpassfiltermittel (31), die zwischen dem Ausgang der zweiten Phasenvergleichsmittel (100) und der Anpassungsschaltung (32) angeschlossen sind, wobei die Anpassungsschaltung in Gegenrichtung die variablen Verzögerungsschaltungen in Abhängigkeit vom Hochfrequenzbereich des radialen Fehlersignals (Sr) steuert.

**FIG.1**

**FIG.2A**

**FIG.2B**

FIG.3A

FIG.3B

FIG.4

FIG.5

FIG.6

FIG.7

FIG.8